# EUROPÄISCHE PATENTSCHRIFT

(11) **EP 1 430 209 B1**
(45) Veröffentlichungstag und Bekanntmachung des Hinweises auf die Patenterteilung: **01.03.2006**
(21) Anmeldenummer: 02774305.3
(22) Anmeldetag: 04.09.2002
(51) Int. Cl.: F02D 41/22, F02D 31/00

(54) **VERFAHREN ZUR STEUERUNG EINER BRENNKRAFTMASCHINE**
METHOD FOR CONTROLLING AN INTERNAL COMBUSTION ENGINE
PROCEDE DE COMMANDE D'UN MOTEUR A COMBUSTION INTERNE

(30) Priorität: 25.09.2001 DE 10147163
(43) Veröffentlichungstag der Anmeldung: 23.06.2004
(73) Patentinhaber: SIEMENS AKTIENGESELLSCHAFT, 80333 München (DE)
(72) Erfinder: JEHLE, Martin, 93051 Regensburg (DE)
(86) Internationale Anmeldenummer: PCT/DE2002/003270
(87) Internationale Veröffentlichungsnummer: WO 2003/027470

(56) Entgegenhaltungen:
- DE-A- 3 844 286
- DE-A- 4 313 993
- DE-A- 19 703 685
- DE-A- 19 704 313

## Beschreibung

Die Erfindung betrifft ein Verfahren zur Steuerung einer Brennkraftmaschine, mit einem Ansaugtrakt, in dem eine Drosselklappe in einem Saugstutzen und ein Ventil in einem Bypass zu dem Saugrohrstutzen angeordnet sind, einem Fahrpedal, das mechanisch mit der Drosselklappe gekoppelt ist, und einem Sensor zum Erfassen der Fahrpedalstellung oder der Drosselklappenstellung, der die erfaßte Stellung an eine Motorsteuerung zur Bestimmung eines Drehmomentsollwerts weiterleitet. Auch ist möglich, mehrere Drehmomentensollwerte für einzelne Stellgrößen zu bestimmen.

DE-19703685 beschreibt ein Motorsteuerverfahren (ohne Bypass), bei dem zwei Pedalsensoren miteinander verglichen werden um auf einen Fehler zu schließen. Im Fehlerfall wird ein Notlaufsollmoment in Abhängigkeit von der Drehzahl ermittelt, welches vom Schaltzustand des Fahrzeugs abhängig gemacht werden kann.

Aus DE 198 03 664 A1 ist ein Steuerverfahren für eine Brennkraftmaschine bekannt, bei der die Drosselklappe mechanisch mit dem Fahrpedal gekoppelt ist. Die Motorsteuerung nimmt eine Drehmomentensteuerung vor, wobei die Motorsteuerung über ein Bypassventil die in die Brennkraftmaschine eingehende Luftmasse steuert. Die Fahrpedalstellung wird mit einem Sensor erfaßt und an die Motorsteuerung zur Berechnung eines Drehmomentsollwerts unter Berücksichtigung von Drehmomentanforderungen der Motorsteuerung weitergeleitet. Bei einem fehlerhaften Sensor fehlt damit eine wesentliche Eingangsgröße für die Motorsteuerung.

Soll die fehlende Eingangsgröße des Sensors zur Fahrpedalstellung ersetzt werden, indem mit einem Lastsensor-Meßwert, beispielsweise dem Saugrohrdruck oder Luftmassenstrom, ein Ersatz für die Fahrpedalstellung bzw. Drosselklappenstellung geschaffen wird, so treten besondere Schwierigkeiten auf. Die tatsächliche Fahrpedalstellung kann von dem ermittelten Ersatzwert ganz erheblich abweichen, insbesondere während dynamischer Vorgänge. Hierbei kann es zu nicht kontrollierbaren Rückkopplungseffekten kommen, bei denen der Ersatzwert der Fahrpedalstellung die Ansteuerung des Bypassventils beeinflußt, wodurch die Luftmasse und damit der Lastsensor-Meßwert beeinflußt wird. Dieser hat wiederum Rückwirkung auf die errechnete Fahrpedalstellung, so daß eine Rückkopplung für die Stellung des Bypass-Ventils auftritt, die nicht zuverlässig kontrollierbar ist.

Der Erfindung liegt die Aufgabe zugrunde, eine Motorsteuerung bereitzustellen, die für den Fall, daß der Sensor zur Erfassung der Fahrpedalstellung fehlerhafte Signale erzeugt oder ausfällt in zuverlässiger Weise eine Steuerung des Motors vornehmen kann.

Die Aufgabe wird durch ein Verfahren mit den Merkmalen aus Anspruch 1 gelöst. Vorteilhafte Ausgestaltungen des Verfahrens finden sich in den Unteransprüchen.

Das erfindungsgemäße Verfahren betrifft eine Brennkraftmaschine, mit einem Ansaugtrakt in dem eine Drosselklappe in einem Saugstutzen und ein Ventil im Bypass zu dem Saugrohrstutzen angeordnet sind. Ein Fahrpedal ist mechanisch mit der Drosselklappe gekoppelt. Ferner ist ein Sensor zum Erfassen der Fahrpedalstellung oder Drosselklappenstellung vorgesehen, der die erfaßte Stellung an eine Motorsteuerung zur Bestimmung eines Drehmomentsollwerts weiterleitet. Das Verfahren betrifft nun die Situation, in der der Sensor ausgefallen ist. Die Motorsteuerung schaltet ansprechend auf eine erkannte Fehlfunktion des Sensors in einen ersten oder zweiten Steuermodus. In dem ersten Steuermodus wird das Ventil im Bypass entsprechend einem Drehmomentsollwert bei fehlender Betätigung des Fahrpedals gesteuert. Mit anderen Worten ausgedrückt, wird in dem ersten Steuermodus das Ventil im Bypass derart gesteuert, wie es einer fehlenden Betätigung des Fahrpedals entspricht. In diesem ersten Steuermodus wird beispielsweise in der Motorsteuerung ein Flag gesetzt, daß das Fahrpedal nicht betätigt ist. In diesem Fall können keine Rückkopplungseffekte bei der Ansteuerung des Bypass-Ventils auftreten, da hierfür nicht auf einen geschätzten Ersatzwert zurückgegriffen werden muß. Die Steuerung des Motors erfolgt weiterhin wie gehabt. In dem zweiten Steuermodus wird das Ventil im Bypass abhängig von einem oder mehreren Parametern der Motorsteuerung gesteuert, die nicht direkt von der Luftmasse abhängen. Indem beispielsweise auf die Drehzahl zurückgegriffen wird, kann eine Rückkopplung vermieden werden. Von den bekannten Steuerverfahren der Motorsteuerung mit ihren unterschiedlichen Funktionen muß also lediglich in dem zweiten Steuermodus abgewichen werden, in dem die Steuerung über einen anderen Parameter der Motorsteuerung erfolgt. Die Funktionen wirken in dem zweiten Steuermodus nicht länger durch die Stellung des Bypass-Ventils, sondern bevorzugt über die Zündung. Allgemein sind die Bedingungen für das Umschalten in einen der Steuermodi komplementär zueinander.

Um bei einem Ausfall des Sensors zur Erfassung der Fahrpedalstellung, Fehlsteuerungen zu vermeiden, schaltet die Motorsteuerung in den ersten Steuermodus, wenn die Drosselklappe geschlossen ist. Die geschlossene Stellung der Drosselklappe kann beispielsweise durch einen in der Nähe der Drosselklappe vorgesehenen Schalter erfaßt werden. Alternativ hierzu ist es auch möglich, mit einem Luftmassensensor oder einem Saugrohrdrucksensor einen Schätzwert für die Stellung der Drosselklappe oder des Fahrpedals zu ermitteln und in den zweiten Steuermodus zu schalten, wenn die Drosselklappe gemäß dem Schätzwert weiter als eine vorbestimmte Stellung geöffnet ist. Der Schätzwert für die Stellung der Drosselklappe wird bevorzugt unter Berücksichtigung der Position des Bypass-Ventils ermittelt. Ebenfalls kann ein Schalter zur Erfassung eines nicht betätigten Fahrpedals vorgesehen sein. Bei dieser Ausgestaltung arbeitet die Motorsteuerung in dem ersten Steuermodus, wenn ein Signal für ein nicht betätigtes Fahrsignal vorliegt.

In einer bevorzugten Weiterführung des erfindungsgemäßen Verfahrens bestimmt die Motorsteuerung im ersten Steuermodus zusätzlich den Zündwinkel und/oder eine Zylinderabschaltung wie im fehlerfreien Betrieb. Die zeitweise Zylinderabschaltung dient zur Drehmomentreduzierung. Im zweiten Steuermodus wird von der Motorsteuerung der Zündwinkel wie im fehlerfreien Betrieb aus dem Drehmomentsollwert bestimmt. Auch im zweiten Steuermodus kann die Motorsteuerung einzelne oder mehrere Zylinder abhängig von einem Drehmomentsollwert zeitweise abschalten. Vorteilhafterweise wird im zweiten Steuermodus ein Drehmomentsollwert bestimmt, der mindestens dem Moment bei geschätzter oder gefühlter Luftmasse, bei optimalem Zündwinkel und bei Betrieb aller Zylinder, entspricht, falls keine Drehmomentreduzierung erforderlich ist.

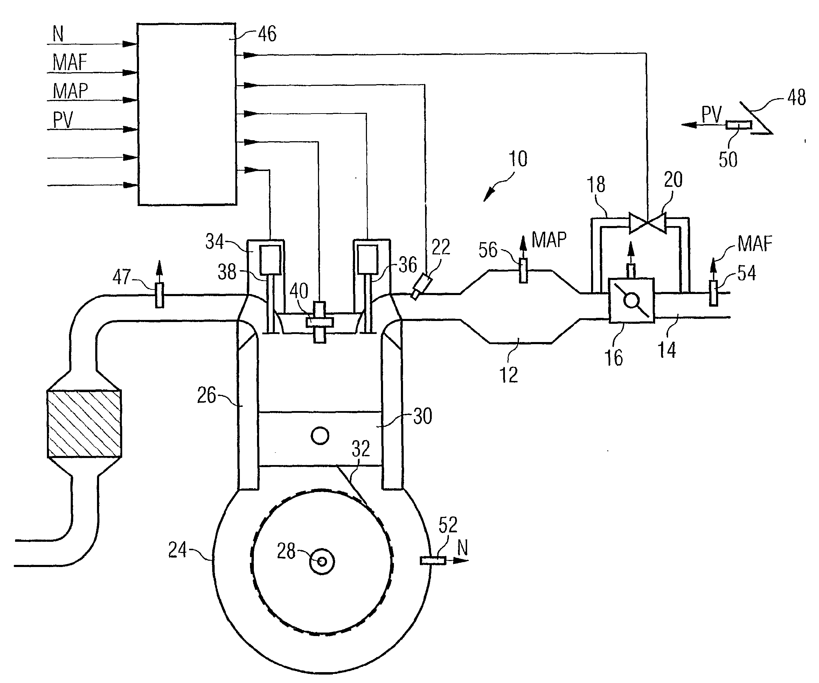

Die einzige Figur zeigt eine Brennkraftmaschine mit einer Steuereinrichtung.

Die Brennkraftmaschine 10 besitzt einen Ansaugtrakt 12, der über einen Saugstutzen 14 mit Frischluft versorgt wird. Der Ansaugtrakt 12 ist mit einer schematisch dargestellten Drosselklappe 16 versehen. Parallel zu dem Saugstutzen mit der Drosselklappe 16 ist ein Bypass 18 angeordnet, der mit dem Saugstutzen 14 verbunden ist. In dem Bypass 18 ist ein Ventil 20 vorgesehen, das den Bypass 18 öffnet und schließt.

Ein Einspritzventil 22 führt dem Ansaugtrakt 12 Kraftstoff zu. In der einzigen Figur ist ferner dargestellt, ein Motorblock 24 der Brennkraftmaschine, der einen Zylinder 26 und eine Kurbelwelle 28 besitzt. Ein Kolben 30 ist über eine Pleuelstange 32 mit der Kurbelwelle 28 verbunden.

Ein Zylinderkopf 34 ist vorgesehen, der einen Ventiltrieb mit mindestens einem Einlaßventil 36 und einem Auslaßventil 38 besitzt. Eine Zündkerze 40 ist beispielhaft in dem Zylinderkopf 34 vorgesehen. In der Figur ist lediglich ein Zylinder 26 dargestellt.

Einer Motorsteuerung 46 für die Brennkraftmaschine sind Sensoren zugeordnet, die verschiedene Meßgrößen erfassen und diese an die Motorsteuerung 46 weiterleiten.

Für ein Fahrpedal 48 der Brennkraftmaschine ist ein Fahrpedalsensor 50 oder ein Drosselklappensensor (nicht dargestellt) vorgesehen, dessen Ausgangssignal PV an der Motorsteuerung 46 anliegt. Nicht dargestellt in der Figur ist, daß die Steuerung der Drosselklappe beispielsweise über einen Bowdenzug direkt von der Stellung des Fahrpedals abhängt. Aus der Eingangsgröße PV wird zusammen mit weiteren Betriebsparametern die Stellung des Bypassventils 20 berechnet. Ist der Sensor 50 für das Fahrpedal defekt, so wird die Drosselklappe 16 weiterhin durch das Fahrpedal gestellt, während der Eingangswert zur Bestimmung des Soll-Werts für die Stellung des Ventils 20 fehlt.

Diagnostiziert die Motorsteuerung 46 aufgrund der vorliegenden Betriebsparameter, daß der Sensor 50 fehlerhaft arbeitet, beispielsweise durch falsche Signalpegel wie sie bei einem Leitungsbruch oder dergleichen auftreten, so schaltet die Motorsteuerung 46 in einen Fehlermodus um. Der Fehlermodus besitzt einen ersten und einen zweiten Steuermodus. In dem ersten Steuermodus, dem sogenannten "Fahrer passiv-Modus", wird der Fahrerwunsch als ein geringes Moment definiert. Eine in der Motorsteuerung 46 abgelegte Drehmomentenstruktur und die Ansteuerung des Ventils 20 können ungehindert weiterarbeiten. Dies hat den Vorteil, daß andere Motorsteuerungsfunktionen, wie beispielsweise eine Leerlaufregelung, weiterhin über das Ventil 20 erfolgen können, wobei die Drehmomentenstruktur in der Motorsteuerung unverändert arbeiten kann.

In dem zweiten Steuermodus, dem sogenannten "Fahrer aktiv"-Modus, wird das Bypassventil 20 nicht mehr über die Drehmomentenstruktur gesteuert, sondern abhängig von Größen, die nicht unmittelbar von der Luftmasse abhängen. In der dargestellten Brennkraftmaschine erfaßt ein Sensor 52 die Drehzahl N der Kurbelwelle 28. Im Fahrer-aktiv-Modus wird beispielsweise die Stellung für das Ventil 20 abhängig von der Drehzahl N durchgeführt. Hierzu ist in der Motorsteuerung ein Kennfeld abgelegt, daß abhängig von der Motordrehzahl die Stellung des Ventils 20 bestimmt. Dabei wird als Fahrerwunsch mindestens das Drehmoment errechnet, welches sich bei optimalem Zündzeitpunkt und aktueller Luftmasse ergibt, wenn alle Zylinder im Betrieb sind. Die aktuelle Luftmasse wird von einem Luftmassenmesser 54 erfaßt und an die Motorsteuerung 46 weitergeleitet. Aus der erfaßten Luftmasse kann bei dem optimalen Zündzeitpunkt ein von dem Fahrer angefordertes Moment berechnet werden. Dadurch legt die in der Motorsteuerung abgelegte Momentenstruktur den optimalen Zündzeitpunkt an, wenn keine anderen Funktionen eine Drehmomentsenkung anfordern. Ein Absenken des Moments durch Zündeingriff oder Zylinderabschaltung ist weiterhin mit den normalen Momenten-Schnittstellen der Motorsteuerung 46 möglich. Ebenfalls kann die aktuelle Luftmasse über einen Drucksensor 56 bestimmt werden, der den Saugrohrdruck MAP mißt.

Durch die Unterscheidung in zwei Betriebsmodi bei einem Versagen des Fahrpedalsensors können große Teile der Motorsteuerungs-Funktionalität auch bei einem Fehler des Fahrpedalsensors beibehalten werden, ohne das besondere Maßnahmen ergriffen werden müssen.

## Patentansprüche

1. Verfahren zur Steuerung einer Brennkraftmaschine,
- mit einem Ansaugtrakt (12), in dem eine Drosselklappe (16) in einem Saugstutzen (14) und ein Ventil (20) in einem Bypass (18) zu dem Saugrohrstutzen (14) angeordnet sind,
- mit einem Fahrpedal (48), das mechanisch mit der Drosselklappe (16) gekoppelt ist, und
- mit einem Sensor (50) zum Erfassen der Fahrpedalstellung (PV) oder der Drosselklappenstellung, der die erfaßte Stellung an eine Motorsteuerung (46) zur Bestimmung eines Drehmomentsollwerts weiterleitet,
das die folgenden Verfahrensschritte aufweist:
- die Motorsteuerung arbeitet bei einer Fehlfunktion des Sensors (50) entweder in einem ersten oder einem zweiten Steuermodus,
- in dem ersten Steuermodus wird das Ventil (20) im Bypass (18) abhängig von dem Drehmomentsollwert gesteuert, wobei der Drehmomentsollwert wie bei einer fehlenden Betätigung des Fahrpedals bestimmt wird, und
- in dem zweiten Steuermodus wird das Ventil (20) im Bypass (18) abhängig von der Drehzahl (N) gesteuert.

2. Verfahren nach Anspruch 1, **dadurch gekennzeichnet, daß** die Motorsteuerung in dem ersten Steuermodus arbeitet, wenn die Drosselklappe geschlossen oder weitgehend geschlossen ist.

3. Verfahren nach Anspruch 2, **dadurch gekennzeichnet, daß** ein Schalter zur Erfassung der geschlossenen Drosselklappe vorgesehen ist und die Motorsteuerung bei einem Signal des Schalters für eine geschlossene oder weitgehend geschlossene Drosselklappe in dem ersten Steuermodus arbeitet.

4. Verfahren nach Anspruch 1, **dadurch gekennzeichnet, daß** ein Schalter zur Erfassung eines nicht betätigten Fahrpedals vorgesehen ist und die Motorsteuerung bei einem Signal des Schalters für ein nicht betätigtes Fahrpedal in dem ersten Steuermodus arbeitet.

5. Verfahren nach Anspruch 1 oder 2, **dadurch gekennzeichnet, daß** mit einem Luftmassensensor (54) oder einem Saugrohrdrucksensor (56) ein Schätzwert für die Drosselklappenstellung bzw. die Fahrpedalstellung ermittelt wird und die Motorsteuerung in dem ersten Steuermodus arbeitet, wenn in der geschätzten Stellung der Drosselklappe oder des Fahrpedals diese(s) weniger als eine vorbestimmte Grenzstellung geöffnet bzw. betätigt ist.

6. Verfahren nach einem der Ansprüche 1 bis 5, **dadurch gekennzeichnet, daß** von der Motorsteuerung im ersten Steuermodus zusätzlich der Zündwinkel und/oder eine Zylinderabschaltung wie im fehlerfreien Betrieb aus dem Drehmomentsollwert bestimmt wird.

7. Verfahren nach einem der Ansprüche 1 bis 6, **dadurch gekennzeichnet, daß** das von der Motorsteuerung im zweiten Steuermodus der Zündwinkel und/oder eine Zylinderabschaltung wie im fehlerfreien Betrieb aus dem Drehmomentsollwert bestimmt wird.

8. Verfahren nach einem der Ansprüche 1 bis 7, **dadurch gekennzeichnet, daß** im zweiten Steuermodus der Drehmomentsollwert bestimmt wird, der mindestens dem Moment bei der geschätzten oder gefühlten Luftmasse, bei optimalem Zündwinkel sowie bei Betrieb aller Zylinder, entspricht, falls keine Drehmomentreduzierung angefordert wird.

## Claims

1. Method for control of an internal combustion engine,
- with an induction tract (12), in which a throttle valve (16) is arranged in an inlet manifold (14) and a valve (20) in a bypass (18) to the inlet manifold pipe (14),
- with an accelerator pedal (48), which is connected mechanically to the throttle valve (16), and
- with a sensor (50) for recording the accelerator pedal position (PV) or the throttle valve position, which passes on the position recorded to an engine controller (46) for determining a required torque value,
featuring the following steps:
- the engine controller operates in the event of the sensor malfunction (50) either in a first or in a second control mode,
- in the first control mode the valve (20) in the bypass (18) is controlled as a function of the required torque value, with the required torque value being determined as if the accelerator pedal were not being actuated, and
- in the second control mode the valve (20) in the bypass (18) is controlled as a function of the speed (N).

2. Method in accordance with claim 1, **characterized in that** the engine controller operates in the first control mode, if the throttle valve is closed or largely closed.

3. Method in accordance with claim 2, **characterized in that** a switch is provided for recording the closed throttle valve and the engine controller operates in the first control mode with a signal of the switch for a closed or largely closed throttle valve.

4. Method in accordance with claim 1, **characterized in that** a switch for recording a non-actuated accelerator pedal is provided and the engine controller operates in the first control mode with a signal of the switch for a non-actuated accelerator pedal.

5. Method in accordance with claim 1 or 2, **characterized in that**, with an air mass sensor (54) or an inlet manifold pressure sensor (56) an estimated value is determined for the throttle valve setting or the accelerator pedal setting and the engine controller operates in the first control mode, if in the estimated setting of the throttle valve or of the accelerator pedal this is opened or actuated less than a predetermined limit position.

6. Method in accordance with one of the claims 1 to 5, **characterized in that** the ignition angle and/or a cylinder shutdown as in error-free operation is determined by the engine controller in the first control mode from the required torque value.

7. Method in accordance with one of the claims 1 to 6, **characterized in that** the ignition angle and/or a cylinder shutdown is determined as in error-free operation by the engine controller in the second control mode from the required torque value.

8. Method in accordance with one of the claims 1 to 7, **characterized in that**, in the second control mode the required torque value is determined which corresponds to at least the torque with the estimated or filled air mass, at optimum ignition angle as well as for operation of all cylinders if no torque reduction is requested.

## Revendications

1. Procédé de commande d'un moteur à combustion interne,
- comportant un collecteur d'admission (12), dans lequel sont disposés, dans une tubulure d'admission (14), un papillon des gaz (16) et, dans un by-pass (18) conduisant à la tubulure d'admission (14), une soupape (20),
- comportant une pédale d'accélérateur (48) qui est couplée mécaniquement au papillon des gaz (16), et
- comportant un capteur (50) pour relever la position de la pédale d'accélérateur (PV) ou du papillon des gaz (16), qui transmet la position relevée à une commande de moteur (46) pour déterminer une valeur de consigne du couple de rotation,
et présentant les étapes de procédé suivantes:
- la commande de moteur travaille, dans le cas d'un fonctionnement défectueux du capteur (50), soit suivant un premier mode de commande, soit suivant un deuxième mode de commande;
- dans le premier mode de commande, la soupape (20) dans le by-pass (18) est commandée en fonction de la valeur de consigne du couple de rotation, la valeur de consigne du couple de rotation étant déterminée comme dans le cas d'un actionnement défectueux de la pédale d'accélérateur, et
- dans le deuxième mode de commande, la soupape (20) dans le by-pass (18) est commandée en fonction de la vitesse de rotation (N).

2. Procédé suivant la revendication 1, **caractérisé en ce que** la commande de moteur travaille dans le premier mode de commande si le papillon des gaz est fermé ou est presque fermé.

3. Procédé suivant la revendication 2, **caractérisé en ce qu'**un commutateur est prévu pour déterminer que le papillon des gaz est fermé, et la commande de moteur, dans le cas d'un signal du commutateur correspondant à un papillon des gaz fermé ou presque fermé, travaille dans le premier mode de commande.

4. Procédé suivant la revendication 1, **caractérisé en ce que** qu'un commutateur est prévu pour déterminer que le papillon des gaz n'est pas actionné et la commande de moteur, dans le cas d'un signal du commutateur pour un papillon des gaz non actionné, travaille dans le premier mode de commande.

5. Procédé suivant la revendication 1 ou 2, **caractérisé en ce qu'**une valeur estimée pour la position du papillon des gaz ou pour la position de la pédale d'accélérateur est relevée avec un capteur de la masse d'air (54) ou avec un capteur de pression dans le tube d'admission, et la commande de moteur travaille dans le premier mode de commande si, dans la position estimée du papillon des gaz ou de la pédale d'accélérateur, celui-ci ou celle-ci est moins ouvert ou moins actionné qu'une position limite prédéfinie.

6. Procédé suivant l'une des revendications 1 à 5, **caractérisé en ce que**, de plus, l'angle d'allumage et/ou une coupure d'alimentation du cylindre sont déterminés par la commande de moteur dans le premier mode de commande, comme en fonctionnement sans défectuosité, à partir de la valeur de consigne du couple de rotation.

7. Procédé suivant l'une des revendications 1 à 6, **caractérisé en ce que** l'angle d'allumage et/ou une coupure d'alimentation du cylindre sont déterminés par la commande de moteur dans le deuxième mode de commande, comme en fonctionnement sans défectuosité, à partir de la valeur de consigne du couple de rotation.

8. Procédé suivant l'une des revendications 1 à 7, **caractérisé en ce que** la valeur de consigne du couple de rotation est déterminée, dans le deuxième mode de commande, cette valeur correspondant au moins au couple dans le cas de la masse d'air estimée ou complète, pour un angle d'allumage optimal ainsi que pour un fonctionnement de tous les cylindres; pour le cas où aucune réduction du couple de rotation n'a été commandée.
